# EUROPEAN PATENT SPECIFICATION

(11) **EP 2 653 494 B1**
(45) Date of publication and mention of the grant of the patent: **17.07.2019**
(21) Application number: 12002784.2
(22) Date of filing: 20.04.2012
(51) Int. Cl.: C08L 5/00, A23L 2/52

(54) **Aqueous gellan dispersion**
Wässrige Gellandispersion
Dispersion aqueuse de gomme gellane

(43) Date of publication of application: 23.10.2013
(73) Proprietor: ADM WILD Europe GmbH & Co. KG, 69214 Eppelheim (DE)
(72) Inventor: Heidebach Thomas, 14624 Dallgow-Döberitz (DE); Sattler Robert, 68723 Oftersheim (DE); Chatard Dominique, 69121 Heidelberg (DE); Sass Matthias, 68723 Oftersheim (DE); De With Axel, 68723 Plankstadt (DE)
(74) Representative: Grünecker Patent- und Rechtsanwälte PartG mbB

(56) References cited:
- WO-A1-96/00018
- WO-A1-96/39047
- WO-A1-99/64468

## Description

The present invention relates to an aqueous gellan dispersion.

Gellan is a linear anionic exocellular heteropolysaccharide of ∼ 5 x 10⁶ Da, produced by microbial fermentation with the bacterium *Sphingomonas elodea* in bulk quantities. It comprises the monosaccharide units glucose, glucuronic acid and rhamnose in a molar ratio of 2:1:1 and has a tetrasaccharide repeat unit. In the native, high-acyl form, the polymer is produced with one L-glyceryl substituent every repeat unit and one acetyl substituent every second repeat unit (Hydrocolloid applications; Chapter 4: Gellan Gum; Editor: Nussinovitch, A.; 1997 Chapman & Hall, UK).

Gellan exists in a mixed salt form, predominantly in the potassium form and in smaller amounts in the sodium- and calcium form. It may be used in the food and beverage industry as a texture building additive with unique gelling abilities. The addition of gellan to aqueous solutions can significantly influence its viscosity and texture, and lead to the development of weak so called shear-thinning "fluidic gels" as well as very strong gels with increasing concentrations.

The texture building behaviour of gellan also depends on the hydration level of the gellan molecules, which is influenced by the concentration of mono- and divalent cations present in the aqueous solution. Furthermore, an initial heating is required to change the molecular structure of the gellan towards achievement of the full texture building potential after re-cooling. The temperature required for sol-gel transition strongly depends on the amount of divalent cations in the solution and is often between 65 and 80°C. Prior to sol-gel transition, hot gellan polymers are present in single-coiled chains. Re-cooling of the heated gellan sol promotes the formation of a threefold left-handed double helix, stabilized by internal hydrogen bonding. Gellan double helices associate in the presence of gel-promoting cations to form junction zones, leading to the development of three-dimensional gels. Divalent cations (e.g. Ca²⁺) form an ionic bond between carboxyl groups from neighbouring chains (Huang, Y., Singh, P. P., Tang, J., Swanson, B. G. (2004), Gelling temperatures of high acyl gellan as affected by monovalent and divalent cations with dynamic rheological analysis, Carbohydrate Polymers, 56, 27-33; Nickerson, M. T., Paulson, A. T., Speers, R. A. (2003): Rheological properties of gellan solutions: effect of calcium ions and temperature on pre-gel formation; Food Hydrocolloids, 17, 577-583)
While gellan is soluble in hot water, however, when being added to cold aqueous solutions, the hydration level depends on the concentration of divalent cations brought into the solution through the gellan preparation or already present in the water, naturally or added. The higher the concentration of divalent ions, the less hydration is achieved at ambient temperatures. Since the cation concentration of tab water from various supplies may vary widely, there is no general statement with respect to dissolution behaviour in cold process water. In order to control the influence of divalent cations, sometimes complexing agents (sequestering agents) are added to bind the divalent cations in the solution. If gellan is dissolved in cold water, it results in highly viscous solutions already at very low concentrations (Hydrocolloid applications; Chapter 4: Gellan Gum; Editor: Nussinovitch, A.; 1997 Chapman & Hall, UK).

Within practical applications in the beverage industry, the required amount of gellan is homogeneously dispersed in cold water ideally without hydration, and the mixture is subsequently heated to at least 70°C in order to achieve hydration. Furthermore, divalent cations are added before or during heating in a required amount to promote gellation during re-cooling, when the desired structure is built. Due to the lack of divalent cations, already a partial hydration in the initial cold aqueous solution can lead to undesired agglomeration and lumping.

In ready-to-drink beverages, the application levels of gellan are relatively low, since it shows a significant impact on the texture at already low levels when it is hydrated.

US-A-5597604 describes a beverage comprising gellan in a concentration between 0.01% and 0.15%. In this document, dry gellan powder is added to the beverage at the desired concentration which is subsequently heated to activate the texturizing properties.

In WO-A-9619925, a carbonated beverage with gellan concentrations of 0.0001-0.2% is claimed. In this case, the gellan is added to the beverage in the required concentration as a dry blend together with a sequestering agent and a calcium salt or as a powder.

The addition of gellan to liquids in the form of a dry mix containing gellan, sequestrants, divalent ions and other compounds is claimed in WO-A-9639048. A dry mix has the advantage that all substances which are able to manipulate the texture building behaviour of gellan are added to the beverage in one step.

However, the general disadvantage of an application of gellan in beverages is that relatively small amounts of powder must be added to the ready-to-drink beverage in accurate dosage, which is often a problem at the manufacturer's side. Furthermore, beverages are commonly produced from concentrated liquid beverage bases. No solution for the application of gellan as a functional ingredient in form of a concentrated liquid beverage base is given.

The reason is that an application of gellan in a concentrated beverage base would require an increase of the gellan concentration in this base. This is necessary to still achieve the desired texturizing effect in the final ready-to-drink beverage after dilution. However, an increase of the gellan concentration in a liquid beverage base would easily lead to an undesired premature gelling or aggregation in the concentrated base.

The concept of dry mixtures was further extended to dry mixtures with higher water contents between 0 and 60% in WO-A-9639047. Although relatively high water contents are present in the mixtures as described in WO-A-9639047, such a concentrated dispersion with a water content of 60% is still claimed as a dry mix composition since gellan can absorb high amounts of water without significant hydration.

However, the disadvantage of such a preparation in the form of a dry mix is that it is not flowable and pumpable and therefore unpractical in dosage. Moreover, such a dry mix tends to the formation of dust, which may result in a difficult handling.

WO-A-96/00018 describes a stable, pourable beverage containing gellan gum, WO-A-99/64468 discloses modified gellan gum compositions that show particular effects.

It is the object of the present invention to provide an aqueous gellan dispersion, which is easily and accurately to dose, which avoids the undesirable formation of dust, which is microbially stable for storage, whose viscosity may be controlled, and which does not agglomerate and/or lump when being added to an aqueous solution. Said object is solved by an aqueous gellan dispersion comprising 2 to 3 wt-% gellan, 3 to 10 wt-% of calcium lactate, and 0.3 to 2 wt-% of malic acid.

The inventors of the present invention have found that such a stable, aqueous gellan dispersion may be prepared by dispersing gellan into a concentrated aqueous solution of calcium lactate.

The term "dispersion" as used herein relates to a homogenous liquid-solid mixture of at least two components, wherein the solid is finely dispersed in the liquid. The term "dispersion" is used herein synonymously for the term "suspension". In the present case, the liquid is water, wherein the gellan is finely dispersed.

Since gellan binds significant amounts of water in a non-hydrated, dispersed state, an increased viscosity at higher gellan concentration may be unfavourable in terms of accurate dosage and pumpability. However, the inventors have surprisingly found that the addition of certain amounts of malic acid leads to a significant decrease of the viscosity of the dispersion. Accordingly, a gellan dispersion representing a liquid may be obtained even at the gellan concentration levels as used in the present invention.

Further, the inventors have found that a certain amount of malic acid may be added to the aqueous gellan dispersion in order to lower the pH which increases the microbial stability of the dispersion.

Surprisingly, the application of such an aqueous gellan dispersion as an ingredient for the production of beverages from concentrates does not lead to lumping or aggregation caused by local concentration peaks when it is re-diluted, heated and re-cooled to achieve full hydration. The sensorial and the texturizing properties of such produced beverages are of similar quality compared to those achieved by using gellan in powdered form directly added to beverages.

The aqueous gellan dispersion according to the invention should be suchlike concentrated that an addition of 5-20 g/L to a final beverage leads to the desired structure. To achieve this, the concentration of gellan in the aqueous dispersion should be between 2 and 3 wt-%.

In order to attain the desired gel-supporting properties, the amount of calcium lactate in the aqueous dispersion should be from 3 to 10 wt-%.

The addition of calcium lactate to gellan dispersions increases the gel-strength after sol-gel transitions due to heating and re-cooling.

In order to adjust the pH-value of the dispersion to 3.0 to 4.0, which is beneficial for microbial stability and low viscosity, malic acid is added in an amount of 0.3 to 2 wt-%.

In a preferred embodiment of the invention, in combination with any of the embodiments listed above or below, the aqueous dispersion according to the invention comprises 2 to 3 wt-% gellan, 5 to 10 wt-% of calcium lactate, and 0.8 to 1.2 wt-% of malic acid.

If malic acid is added in an amount of 0.8 to 1.2 wt-% to the dispersion according to the invention, the microbial stability of the dispersion according to the invention is particularly high. If calcium lactate is added in an amount of 5 to 10 wt-%, the gel-strength properties of the dispersion according to the invention are particularly increased.

The aqueous gellan dispersion according to the invention may further comprise at least one sequestrant, flavouring agent, sweetener, food colorant, food preservative, fruit and/or plant extract or juice, vitamin, antioxidant, and mixtures thereof.

In a preferred embodiment of the invention, in combination with any of the embodiments listed above or below, the dispersion according to the invention additionally comprises at least one sequestrant selected from the group consisting of sodium citrate, potassium citrate, calcium citrate, sodium tartrate, potassium tartrate, sodium-potassium tartrate, sodium phosphate, potassium phosphate, calcium tartrate, triammonium citrate, calcium-disodium-ethylenediaminetetraacetate (EDTA), diphosphate, triphosphate, polyphosphate, sodiumgluconate, potassiumgluconate, and calciumgluconate.

In a further preferred embodiment, in combination with any of the above or below embodiments, the gellan dispersion in accordance with the present invention additionally comprises at least one flavouring agent. Common flavouring agents are ethyl maltol, maltol, maltol derivatives, such as maltol isobutyrate; vanillin, ethyl vanillin, vanillic acid, furaneol, furaneol derivatives, such as ethyl furaneol, furaneol acetate, and homofuronol; heliotropin, γ-lactones and δ-lactones, such as γ-nonalactone, γ-undecalactone, δ-decalactone, and massoia lactone; coumarine and derivatives thereof, such as dihydrocoumarin; fruit esters, such as ethyl propionate, ethyl butyrate, butyl butyrate, isoamyl acetate, isoamyl butyrate, allyl caproate, ethyl caprylate, anisyl acetate, diethyl malonate, and diethyl succinate; furfural, 5-methylfurfural, phenyl ethanal, p-hydroxybenzyl acetone, p-hydroxybenzaldehyde, and trans-cinnamic acid.

In another preferred embodiment, in combination with any of the embodiments listed above or below, the dispersion in accordance with the present invention further comprises at least one sweetener. The sweetener may be selected from the group of natural sweeteners and artificial sweeteners or mixtures thereof. Common natural sweeteners are saccharose, fructose, glucose, corn syrup, high fructose corn syrup, xylose, arabinose, rhamnose, xylitol, mannitol, sorbitol, inositol, honey, steviol glycosides, neohesperidine, isomalt, taumatine, maltitol, maltitol syrup, lactitol, agave nectar, and invert sugar syrup. Common artificial sweeteners are aspartame, acesulfame, neotame, sucralose, saccharine, and sodium cyclamate. More preferably, the composition of the present invention comprises at least one natural sweetener, or a mixture of two or more natural sweeteners. Most preferably, the composition according to the present invention comprises saccharose, steviol glycosides, invert sugar syrup or mixtures thereof. If an artificial sweetener is present, the artificial sweetener is preferably aspartame, acesulfame, sucralose, saccharine, sodium cyclamate.

In another preferred embodiment, in combination with any of the above or below embodiments, the dispersion according to the present invention further comprises at least one additional ingredient selected from the group of food colorants, such as caramel coloring, annatto, chlorophyllin, cochineal, betanin turmeric, saffron, paprika, elderberry juice, pandan, butterfly pea; food preservatives, such as potassium sorbate; fruit and plant extracts and isolates and juices, such as orange, mango, lemon, raspberry, strawberry, banana, apple, blueberry, peach, pear, melon, passion fruit, tomato, and carrot extract or juice; vitamins, such as vitamins A, B12, C, D, E; antioxidants, such as polyphenols, tocopherol, ascorbic acid, sodium ascorbate; and mixtures of two or more additional ingredients.

The aqueous gellan dispersion according to the invention may be used as an ingredient in ready-to-drink beverages exhibiting a pleasant mouth feel. Furthermore, the dispersion according to the invention may be used as an ingredient in a raw material (beverage concentrate) for the production of a ready-to-drink beverage. Accordingly, both the beverage concentrate comprising the aqueous gellan dispersion according to the invention, and the ready-to-drink beverage comprising the beverage concentrate comprising the aqueous gellan dispersion according to the invention represent, in combination with any of the embodiments listed above or below, preferred embodiments of the invention.

The preparation of the aqueous gellan dispersion is accomplished by dispersing gellan into the aqueous solution of calcium lactate and malic acid. In a preferred embodiment, in combination with any of the embodiments listed above or below, the required amount of gellan is added in the form of a powder to a preformed aqueous solution of calcium lactate, followed by the addition of the required amount of malic acid. In another preferred embodiment, in combination with any of the embodiments listed above or below, malic acid may be added first to the aqueous solution of calcium lactate followed by the addition of the gellan powder.

The gellan powder that is used for the preparation of the dispersion according to the invention is preferably in pure form. Nonetheless, a gellan powder comprising significant amounts of additional compounds such as sucrose may also be used for the preparation of the dispersion of the invention. The final weight percentage of gellan in the dispersion of the invention as indicated herein always relates to the actual amount of pure gellan present in the dispersion. Accordingly, if a commercial gellan powder with a purity below 100% is used for the preparation of the dispersion according to the invention, the purity of this commercial gellan must be taken into account in order to arrive at the final weight percentage of gellan in the dispersion as defined in the present invention.

Additional ingredients such as sequestrants, flavouring agents, sweeteners, food colorants, food preservatives, fruit and/or plant extracts or juices, vitamins, antioxidants may be added to the above mixture of gellan, calcium lactate and malic acid in water. The mixture may then be dispersed by means of homogenization using high pressure homogenizers, microfluidizers, rotor-stator-systems, membrane homogenizers and ultrasonic homogenizers. In a preferred embodiment, in combination with any of the embodiments listed above or below, the dispersion of the present invention is accomplished by means of a rotor-stator-system.

The gellan dispersion according to the invention may be used for the preparation of a beverage concentrate comprising the steps of mixing the gellan dispersion according to the invention with other ingredients of a beverage, such as sequestrants, flavouring agents, sweetener, food colorants, food preservatives, fruit and/or plant extracts or juices, vitamins, antioxidants in order to obtain a homogenous beverage concentrate. Beverage concentrates that may comprise the dispersion according to the invention include, for example, energy drink concentrates, soft drink concentrates, coke drink concentrates, and juice drink concentrates.

The gellan dispersion of the present invention may also be used for the preparation of a ready-to-drink beverage comprising the steps of mixing the gellan dispersion according to the invention with further ingredients of a beverage such as water, sequestrants, flavouring agents, sweeteners, food colorants, food preservatives, fruit and/or plant extract, vitamins, antioxidants, vitamins, and pasteurizing the resulting homogenous mixture in order to obtain a ready-to-drink beverage. Alternatively, the above described beverage concentrate comprising the gellan dispersion according to the invention may be diluted with water, additional ingredients of a beverage such as sequestrants, flavouring agents, sweeteners, food colorants, food preservatives, fruit and/or plant extracts or juices, vitamins, antioxidants may be added, the mixture may be homogenized and finally pasteurized in order to arrive at a ready-to-drink beverage. Ready-to-drink beverages that may comprise the gellan dispersion according to the invention include energy drinks, soft drinks, coke drinks, and juice drinks.

The following examples explain the present invention.

### Examples

### Comparative Example 1: Preparation of a readv-to-drink beverage containing gellan as a texture promoting agent.

A beverage was produced by direct use of various concentrations of gellan powder, according to the ingredient list in Table 1.

Deionized water was mixed with invert sugar sirup at room temperature. Subsequently, calcium lactate and pure gellan powder (Kelcogel LT100-P) were added under slow agitation and mixed until a homogenous dispersion formed. Afterwards, the lemon/lime compound and citric acid were added to the mixture. It was filled up to 100% with de-ionized water. The beverage was then pasteurized at 90°C for 1 min.

A sensorial test revealed that a concentration between 0.02 and 0.03 wt-% gellan in the ready-to-drink beverage resulted in the desired pleasant mouth feel of a fluidic gel.

**Table 1: Recipe of a ready-to-drink beverage, produced by means of various concentrations of gellan powder.**

| **Final Beverages with direct use of Gellan** | | | |
|---|---|---|---|
| | | | |

| **Ingredient** | **Sample 1** | **Sample 2** | **Sample 3** |
|---|---|---|---|
| | in wt-% | in wt-% | in wt-% |
| Gellan, powder | 0,02 | 0,03 | 0,05 |
| Calcium lactate | 0,065 | 0,065 | 0,065 |
| Deionized water | 70 | 70 | 70 |
| Invert suger sirup 71°Brix | 14 | 14 | 14 |

| Mix | | | |
|---|---|---|---|
| Lemon/lime (5% juice) Compound | 1,4 | 1,4 | 1,4 |
| Citric acid solid | 0,1 | 0,1 | 0,1 |
| Deionized water | 14,415 | 14,405 | 14,385 |

| Dissolve and pasteurize at 90°C | | | |
|---|---|---|---|
| Mouthfeel | Slightly viscous | Viscous, pleasant | solid |

### Example 2: Preparation of a ready-to-drink beverage by use of a gellan dispersion

### 2.1. Preparation of a concentrated aqueous gellan dispersion:

2.5 wt-% pure gellan powder (Kelcogel LT100-P),1 wt-% malic acid and 0,12 wt-% sodium benzoate were added to a 5.4 wt-% Ca-lactate aqueous solution and dispersed by means of an ultra-turrax for two minutes. The aqueous dispersion was then stored under refrigerated conditions (5°C) and used within 4 weeks for the preparation of beverages. An aliquot was taken from the dispersion after 7 days and after 28 days of storage, respectively, and analyzed against microbial spoilage by means of standard plate count measurement on nutrient agar. The samples did not show any positive findings on microbial spoilage.

### 2.2 Preparation of a ready-to-drink beverage:

Different beverages were produced by use of various concentrations of aqueous gellan dispersion as described under 2.1, and produced according to the ingredient list in Table 2.

Initially, invert-sugar sirup, the respective juice compound and citric acid were added to the de-ionized water and mixed. Subsequently, the aqueous gellan dispersion of 2.1 was added to the mixture in a concentration of 1.2 wt-% under slow agitation until homogeneously dispersed. Afterwards, the mixture was heated to 85°C and hot-filled in bottles.

This resulted in a concentration of 0.03 wt-% gellan in the final ready-to-drink beverage. A sensorial test revealed that the addition of gellan into the ready-to-drink beverage in the form of a concentrated aqueous dispersion gave a similar desired pleasant mouth feel of a fluidic gel compared to the beverages produced according to example 1.

**Table 2: Recipe of a ready-to-drink beverage, produced by means of various concentrations of the aqueous gellan dispersion.**

| **Final Beverages with use of Dispersion** | | | | |
|---|---|---|---|---|
| | | | | |

| **Ingedient** | **Sample 1** | **Sample 2** | **Sample 3** | **Sample 4** |
|---|---|---|---|---|
| | in wt-% | in wt-% | in wt-% | in wt-% |
| Dispersion | 0,8 | 1,2 | 1,2 | 1,2 |
| Invert sugar sirup 71°Brix | 14 | 14 | 14 | 14 |

| Compound | Lemon/Lime (5% juice) | Lemon/Lime (5% juice) | Orange Emulsion (1% juice) | Orange/Passion/Mango (10% juice) |
|---|---|---|---|---|
| Compound dosage | 1,4 | 1,4 | 0 , 17 | 4 |
| Citric acid solid | 0,05 | 0,05 | 0,2 | 0,28 |
| De-ionized water | 83,75 | 83,35 | 84,43 | 80,52 |
| Heating-Process | Hot filling 85°C | Hot filling 85°C | Hot filling 85°C | Hot filling 85°C |
| Mouthfeel | Sligthly viscous | Viscous, pleasant | Viscous, pleasant | Viscous, pleasant |

### Example 3 : Dependency of the viscosity on the acid concentration

2.0 or 2.5 wt-% pure gellan powder (Kelcogel LT100-P) and different concentrations of malic acid (w/w) were subsequently added to a 5.4 wt-% Ca-lactate aqueous solution and dispersed by means of an ultra-turrax for two minutes.

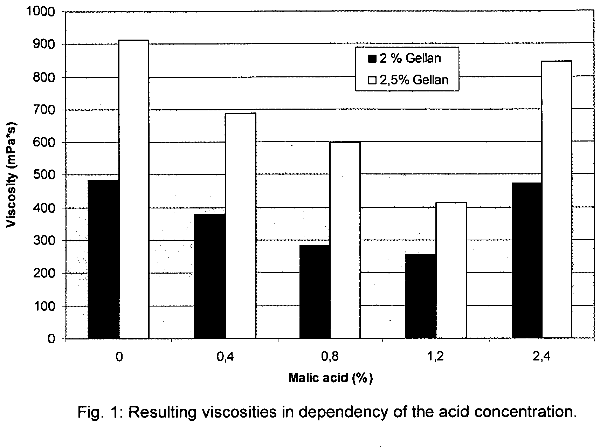

Figure 1 shows the resulting viscosities at both gellan concentrations, in dependency of the acid concentration. It can be seen that the viscosity is significantly reduced by about 50% when 1.2 wt-% malic acid is added to the dispersion, compared to dispersions which contained no malic acid.

## Claims

1. An aqueous gellan dispersion comprising 2 to 3 wt-% gellan, 3 to 10 wt-% of calcium lactate, and 0.3 to 2 wt-% of malic acid.

2. The aqueous gellan dispersion according to claim1 comprising 0.6 to 2 wt-% of malic acid.

3. The aqueous gellan dispersion according to any of claims 1 or 2, further comprising a food preservative.

4. The aqueous gellan dispersion according to any of claims 1 to 3, further comprising a sequestrant.

5. A beverage concentrate comprising the aqueous gellan dispersion according to any of claims 1 to 4.

6. A method for the preparation of an aqueous gellan dispersion according to any of claims 1 to 4 comprising the steps of dispersing gellan and malic acid into an aqueous solution of calcium lactate.

7. A method for the preparation of a ready-to-drink beverage comprising the steps of mixing the aqueous gellan dispersion according to any of claims 1 to 4 with further ingredients of a beverage, and pasteurizing the resulting mixture.

## Patentansprüche

1. Wässrige Gellandispersion, umfassend 2 bis 3 Gew.-% Gellan, 3 bis 10 Gew.-% Calciumlactat und 0.3 bis 2 Gew.-% Äpfelsäure.

2. Wässrige Gellandispersion nach Anspruch 1, umfassend 0.6 bis 2 Gew.-% Äpfelsäure.

3. Wässrige Gellandispersion nach einem der Ansprüche 1 oder 2, ferner umfassend ein Konservierungsmittel für Lebensmittel.

4. Wässrige Gellandispersion einem der Ansprüche 1 bis 3, ferner umfassend einen Komplexbildner.

5. Getränkekonzentrat, umfassend die wässrige Gellandispersion nach einem der Ansprüche 1 bis 4.

6. Verfahren zum Herstellen einer wässrigen Gellandispersion nach einem der Ansprüche 1 bis 4, umfassend die Schritte des Dispergierens von Gellan und Äpfelsäure in eine wässrige Lösung von Calciumlactat.

7. Verfahren zum Herstellen eines Fertiggetränks, umfassend die Schritte des Mischens der wässrigen Gellandispersion nach einem der Ansprüche 1 bis 4 mit weiteren Getränkebestandteilen und Pasteurisieren der resultierenden Mischung.

## Revendications

1. Dispersion aqueuse de gomme gellane comprenant de 2 à 3 % en poids de gomme gellane, de 3 à 10 % en poids de lactate de calcium et 0,3 à 2 % en poids d'acide malique.

2. Dispersion aqueuse de gomme gellane selon la revendication 1 comprenant de 0,6 à 2 % en poids d'acide malique.

3. Dispersion aqueuse de gomme gellane selon l'une quelconque des revendications 1 à 2, comprenant en outre un conservateur alimentaire.

4. Dispersion aqueuse de gomme gellane selon l'une quelconque des revendications 1 à 3, comprenant en outre un agent séquestrant.

5. Concentré de boisson comprenant la dispersion aqueuse de gomme gellane selon l'une quelconque des revendications 1 à 4.

6. Procédé de préparation d'une dispersion aqueuse de gomme gellane selon l'une quelconque des revendications 1 à 4 comprenant les étapes de dispersion de gomme gellane et d'acide malique dans une solution aqueuse de lactate de calcium.

7. Procédé de préparation d'une boisson prête à consommer comprenant les étapes de mélange de la dispersion aqueuse de gomme gellane selon l'une quelconque des revendications 1 à 4 avec d'autres ingrédients de boisson, et de pasteurisation du mélange résultant.
